# EUROPÄISCHE PATENTANMELDUNG

(11) **EP 0 535 600 A2**
(43) Veröffentlichungstag der Anmeldung: **07.04.1993**
(21) Anmeldenummer: 92116662.5
(22) Anmeldetag: 29.09.1992
(51) Int. Cl.: G06F 9/44, G06F 12/06

(54) **Verfahren zur Verifikation einer Konfigurationszugehörigkeit von in Festwertspeicherbausteinen hinterlegten Programm- und/oder Datenmodulen**

(30) Priorität: 30.09.1991 DE 4132525
(71) Anmelder: SIEMENS AKTIENGESELLSCHAFT, D-80333 München (DE)
(72) Erfinder: Freimuth, Thomas, W-4284 Heiden (DE); Becker, Werner, W-5840 Schwerte (DE); Chmielewski, Rolf, W-4390 Gladbeck (DE)

(57) **Zusammenfassung**

Um eine Konfigurationszugehörigkeit von in Festwertspeicherbausteinen hinterlegten Programm- und/oder Datenmodulen überprüfen zu können, wird in den Festwertspeicherbausteinen jeweils an der gleichen Adresse ein dem Programm- und/oder Datenmodul individuell zugeordnetes Identifikationscodewort gespeichert, das für einen Vergleich mit in einer der betreffenden Konfiguration zugeordneten Tabelle vermerkten Identifikationscodeworten aus den Festwertspeicherbausteinen gelesen wird. Das Verfahren kann zur Überprüfung einer ordnungsgemäßen Anordnung von Festwertspeicherbausteinen als auch zur Bildung einer auswählbaren Konfiguration, bestehend aus in wahlfrei angeordneten Festwertspeicherbausteinen hinterlegten Programm- und/oder Datenmodulen verwendet werden.

## Beschreibung

In programmgesteuerten Verarbeitungseinrichtungen werden zur Speicherung von Programmen, insbesondere von auf die Betriebsweise der zugrundeliegenden Hardware bezogenen Programmen, digitale Festwertspeicherbausteine verwendet, die dem Fachmann allgemein als "ROM" (Read Only Memory) bekannt sind. In diese Festwertspeicherbausteine muß mit Hilfe einer Programmiereinrichtung das Programm eingespeichert werden, bevor diese Festwertspeicherbausteine in die programmgesteuerte Verarbeitungseinrichtung eingebaut werden können.

Nicht selten ist ein Programm einer programmgesteuerten Verarbeitungseinrichtung so umfangreich, daß eine Vielzahl derartiger Festwertspeicherbausteine benötigt wird, auf die dann das Programm verteilt wird. In der Hardware der programmgesteuerten Verarbeitungseinrichtung ist für jeden dieser Festwertspeicherbausteine in Abhängigkeit von dem in ihm gespeicherten Programmteil ein individueller Einbauplatz vorgesehen.

Da sich die Festwertspeicherbausteine nach ihrem Inhalt optisch nicht unterscheiden lassen, werden die Festwertspeicherbausteine, um Verwechslungen zu vermeiden, üblicherweise beim Programmiervorgang mit einem zur Identifizierung dienenden Aufkleber versehen. Bei großindustriellen Herstellern von programmgesteuerten Verarbeitungseinrichtungen sind auf diesen Aufklebern Codenummern aufgedruckt, mit deren Hilfe sich ein betreffender Festwertspeicherbaustein zu einem bestimmten Typ von programmgesteuerter Verarbeitungseinrichtung, einer Programmversion und/oder Programmkonfiguration sowie einem Einbauplatz in der Hardware zuordnen läßt.

Trotz dieses Aufklebers kann es in der Fertigung von programmgesteuerten Verarbeitungseinrichtungen mitunter doch vorkommen, daß ein Einbauplatz nicht mit dem für diesen vorgesehenen Festwertspeicherbaustein bestückt wird. In manchen Fällen wird ein solches Versehen auch nicht bei der erstmaligen Inbetriebnahme der programmgesteuerten Verarbeitungseinrichtung erkannt, weil sich z. B. der versehentlich verwendete Festwertspeicherbaustein in seinem Inhalt nur geringfügig, d. h. nur in wenigen Programmsequenzen oder Daten, von dem für den betreffenden Einbauplatz vorgesehenen Festwertspeicherbaustein unterscheidet. Eine Folge davon ist, daß sich dieses Versehen erst beim späteren Benutzer der programmgesteuerten Verarbeitungseinrichtung durch entsprechende Fehlfunktionen bemerkbar macht.

Aufgabe der vorliegenden Erfindung ist es, eine Identifikation, insbesondere eine Erkennung einer Konfigurationszugehörigkeit von Festwertspeicherbausteinen auch mit elektronischen Hilfsmitteln zu ermöglichen.

Gelöst wird diese Aufgabe erfindungsgemäß durch die im Patentanspruch 1 angegebenen Merkmale.

Mit dem erfindungsgemäßen Verfahren ist eine elektronische Identifikation innerhalb einer programmgesteuerten Verarbeitungseinrichtung möglich, mit der z. B. bei jeder Inbetriebnahme der programmgesteuerten Verarbeitungseinrichtung die Zugehörigkeit der in der Hardware befindlichen Festwertspeicherbausteine hinsichtlich des Typs von programmgesteuerter Verarbeitungseinrichtung, der Programmversion und Programmkonfiguration als auch des Einbauplatzes ohne großen Aufwand möglich ist. Damit wird eine versehentliche Fehlbestückung in der Fertigung sofort bei der ersten Inbetriebnahme erkannt.

Die in den Festwertspeicherbausteinen gespeicherten Programm- und/oder Datenmodule sollen im übrigen lediglich als Teile eines Programms bzw. eines Datensatzes verstanden werden; es muß sich demnach bei den Programm- und/oder Datenmodulen nicht um funktionale Module handeln.

Das erfindungsgemäße Verfahren kann auch zur Identifikation von Festwertspeicherbausteinen verwendet werden, deren Aufkleber verlustig gegangen sind. Dazu muß ein betreffender Festwertspeicherbaustein lediglich in ein Auslesegerät eingelegt werden, das zielgerecht die das Identifikationscodewort beinhaltenden Adressen ausliest und das Identifikationscodewort einem Benutzer optisch anzeigt. Zugleich läßt sich auch der Typ der programmgesteuerten Verarbeitungseinrichtung, die Programmversion, die Programmkonfiguration, usw. anzeigen, zu der ein betreffender Festwertspeicherbaustein gehört.

Vorteilhafte Weiterbildungen der Erfindung sind in den Unteransprüchen angegeben.

Mit einem Verfahren nach Anspruch 2 läßt sich eine in der Fertigung vorgenommene Bestückung von Festwertspeicherbausteinen durch die programmgesteuerte Verarbeitungseinrichtung selbst überprüfen. Dabei werden von einem Prüfprogramm die Festwertspeicherbausteine anhand einer Tabelle hinsichtlich ihrer Existenz und ihres korrekten Einbauplatzes überprüft.

Das Prüfprogramm erhält besondere Bedeutung bei einer erstmaligen Inbetriebnahme einer programmgesteuerten Verarbeitungseinrichtung. Nur im Falle einer korrekten Bestückung der Festwertspeicherbausteine wird eine weitere Inbetriebnahme ermöglicht. Bei Abweichungen zwischen der tatsächlichen Bestückung von Festwertspeicherbausteinen und der in der Tabelle vermerkten "Soll-Anordnung" wird eine Fehlermeldung erzeugt, die zu Fehlertexten auf einer Anzeigeeinrichtung führt. Anhand der Fehlertexte kann dann sofort der Einbauplatz erkannt werden, an dem sich ein Festwertspeicherbaustein mit nicht ordnungsgemäßem Programm- und/oder Dateninhalt befindet. In diesem Zusammenhang ist auch von Bedeutung, daß das Verfahren auch dazu dient, um eventuelle Kontaktierungsmängel zu den Festwertspeicherbausteinen oder Defekte der Festwertspeicherbausteine möglichst schnell zu erkennen.

Das Verfahren nach Anspruch 6 bringt den wesentlichen Vorteil mit sich, daß die Festwertspeicherbausteine, deren Programm- und/oder Dateninhalt zur Bildung einer selektierbaren Programm- und/oder Datenkonfiguration in einen Systemspeicher kopiert werden, in einer beliebigen Reihenfolge, d. h. an eine beliebige Stelle der zur Aufnahme dieser Festwertspeicherbausteine vorgesehenen Einbauplätze, positioniert werden können. Ein Selektionsprogramm ermittelt die zu selektierende Konfiguration, die z. B. durch eine Schalterstellung von einem Benutzer vorgegeben werden kann, und sucht anhand einer Tabelle aus den zur Verfügung stehenden Festwertspeicherbausteinen nacheinander die aus, deren Programm- und/oder Dateninhalt zur Bildung der Konfiguration vorgesehen ist. Verfahren zur Freischaltung der Inbetriebnahme und zur Erzeugung von Fehlermeldungen und Fehlertexten sind - wie in Zusammenhang mit dem Verfahren nach Anspruch 2 bereits erwähnt - auch bei diesem Verfahren möglich.

Anhand der Zeichnung werden im folgenden zwei Ausführungsbeispiele der Erfindung naher erläutert.

Dabei zeigen
- FIG 1: eine schematische Darstellung einer Festwertspeicheranordnung in einem Mikroprozessorsystem, und
- FIG 2: eine schematische Darstellung einer Festwertspeicheranordnung in einem Mikroprozessorsystem, bei dem eine Programmkonfiguration durch Kopieren in einem Systemspeicher gebildet wird.

In den Ausführungsbeispielen wird als programmgesteuerte Verarbeitungseinrichtung eine Kommunikationsanlage angesehen, deren Funktionen von einem Mikroprozessorsystem gesteuert werden und die in Abhängigkeit von den nationalen Vorschriften des jeweiligen Landes, in dem sie zum Einsatz kommt, mit unterschiedlichen Programmkonfigurationen, die im allgemeinen als Ländervarianten bezeichnet werden, versehen wird.

Um eine Kommunikationsanlage zu einer bestimmten Ländervariante auszubilden, gibt es prinzipiell zwei verschiedene Methoden. Eine erste Methode besteht darin, nur die dieser Ländervariante zugehörigen Programmteile in die Kommunikationsanlage einzubringen. Die andere Methode besteht darin, die Programmteile für alle möglichen Ländervarianten in der Kommunikationsanlage vorzusehen und dann für eine spezifische Ländervariante eine Auswahl zu treffen. Die zweite Methode hat den Vorteil, daß bei der Herstellung der Kommunikationsanlage keine Unterscheidung zwischen den Ländervarianten getroffen werden muß und ein Umstellen der Ländervariante beim Benutzer jederzeit ohne Aufwand möglich ist.

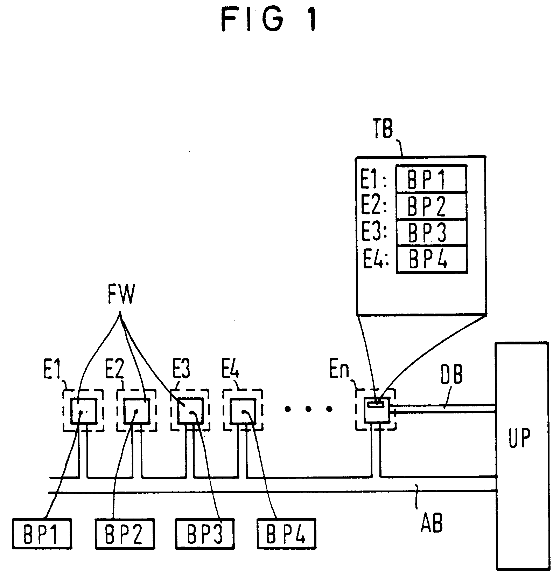

FIG 1 zeigt den Aufbau eines Prozessorsystems in eine Kommunikationsanlage, bei der die Ländervarianten nach der ersten Methode erstellt werden. Das Prozessorsystem besteht aus einem Mikroprozessor UP und einer Vielzahl von zur Aufnahme von Festwertspeicherbausteinen FW vorgesehenen Einbauplätzen E1,...,En, die sowohl über einen Adreßbus AB als auch über einen Datenbus DB mit dem Mikroprozessor UP verbunden sind. In der Fertigung werden an die Einbauplätze E1,...,En die zur Realisierung einer bestimmten Ländervariante vorgesehenen Festwertspeicherbausteine FW in einer vorgeschriebenen Reihenfolge plaziert.

Bei Inbetriebnahme der Kommunikationsanlage wird zunächst ein in einem der Festwertspeicherbausteine FW, der z. B. als "Master PROM" am Einbauplatz En angeordnet sein kann, hinterlegtes Prüfprogramm abgearbeitet. Diesem Prüfprogramm ist eine der vorliegenden Ländervariante individuell zugeordnete Tabelle TB beigefügt, in der in der Reihenfolge der Einbauplätze z. B. E1,...,E4 Identifikationscodeworte hinterlegt sind. Während der Abarbeitung des Prüfprogramms durch den Mikroprozessor UP werden dann, beginnend mit dem am Einbauplatz E1 angeordneten Festwertspeicherbaustein, die Festwertspeicherbausteine FW nacheinander selektiert und jeweils unter der gleichen Adresse in den Festwertspeicherbausteinen FW ein Identifikationscodewort BP1,...,BPn, das z. B. eine alphanumerische Zeichenfolge sein kann, ausgelesen. Das aus dem an einem jeweiligen Einbauplatz E1,...,E4 angeordneten Festwertspeicherbaustein FW ausgelesene Identifikationscodewort BP1,...,BP4 wird dann mit dem in der Tabelle TB hinterlegten, dem jeweiligen Einbauplatz E1,...,E4 zugeordneten Identifikationscodewort BP1,...,BP4 auf Übereinstimmung verglichen. Erst wenn vom Prüfprogramm erkannt wurde, daß an allen Einbauplätzen E1,...,E4 Festwertspeicherbausteine FW mit den laut der Tabelle TB vorgeschriebenen Identifikationscodeworten BP1,...,BP4 hinterlegt sind, wird eine weitere Inbetriebnahme der Kommunikationsanlage freigegeben. Für den Fall, daß an wenigstens einem der Einbauplätze E1,...,E4 ein Festwertspeicherbaustein FW angeordnet ist, aus dem ein nicht mit den Einträgen der Tabelle TB übereinstimmendes Identifikationscodewort gelesen wird, wird auf einer Anzeigeeinrichtung (nicht dargestellt) ein Fehlertext mit Angabe desjenigen Einbauplatzes erzeugt, an dem ein nicht zur betreffenden Ländervariante gehörender Festwertspeicherbaustein FW hinterlegt ist.

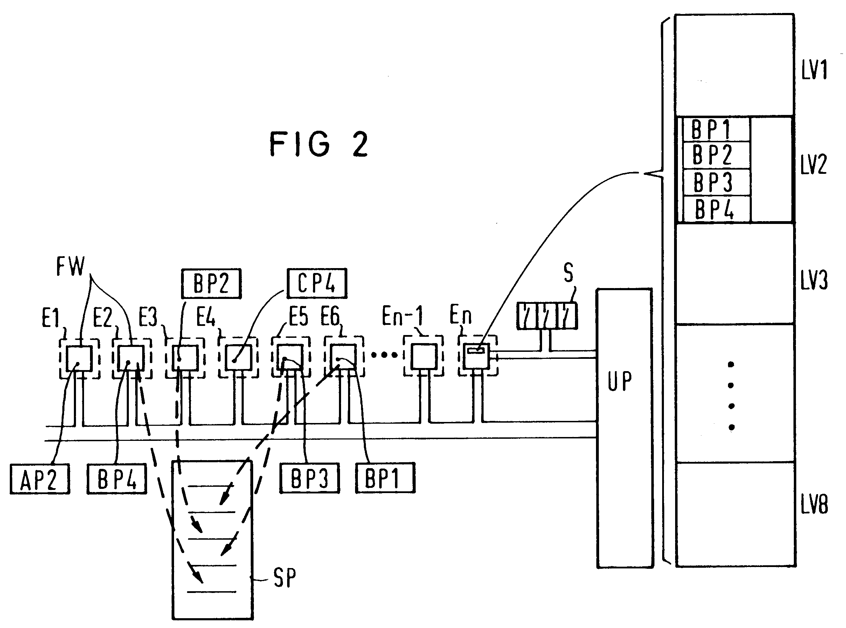

In FIG 2 ist ein Prozessorsystem dargestellt, mit dem eine Bildung von Ländervarianten durch Auswahl von Festwertspeicherbausteinen möglich ist. Das Prozessorsystem weist eine Vielzahl von Einbauplätzen E1,...,En für Festwertspeicherbausteine FW auf, die über einen Datenbus DB und Adreßbus AB mit einem Mikroprozessor UP verbunden sind. An den Daten- und Adreßbus DB, AB ist des weiteren ein Systemspeicher SP angeschlossen, der zur Aufnahme von aus den Festwertspeicherbausteinen FW übertragenen Programmteilen dient. An den Datenbus DB ist außerdem eine Schalteranordnung S angeschlossen, die zur Auswahl einer Ländervariante vorgesehen ist.

Bei der Fertigung der Kommunikationsanlage werden an den Einbauplätzen E1,...,En die zur Bildung sämtlicher möglicher Ländervarianten nötigen Festwertspeicherbausteine FW plaziert. Bis auf einen, als "Master PROM" bezeichneten Festwertspeicherbaustein FW, der auf einem bestimmten Einbauplatz En angeordnet werden muß, können die anderen Festwertspeicherbausteine FW in willkürlicher Reihenfolge auf den Einbauplätzen E1,...,En-1 angeordnet werden.

Bei der Inbetriebnahme der Kommunikationsanlage wird zunächst ein in dem "Master PROM" hinterlegtes Selektionsprogramm ausgeführt. Dabei wird zunächst die Einstellung der Schalteranordnung S abgefragt und in Abhängigkeit von dieser eine von mehreren, dem Selektionsprogramm beigeordneten Ländervariantentabellen LV1,...,LV8 ausgewählt. In einer ausgewählten Ländervariantentabelle, z. B. LV2, sind in einer bestimmten Reihenfolge Identifikationscodeworte BP1,...,BP4 vermerkt. Bei Abarbeitung des Selektionsprogramms wird zunächst von dem an erster Stelle in der betreffenden Ländervariantentabelle LV2 hinterlegten Identifikationscodewort BP1 ausgegangen und aus den an den Einbauplätzen E1,...,En-1 befindlichen Festwertspeicherbausteinen FW deren Identifikationscodeworte ausgelesen, bis eine Übereinstimmung mit dem in der Ländervariantentabelle LV2 hinterlegten Identifikationscodewort BP1 erkannt wird. Der Inhalt desjenigen Festwertspeicherbausteins FW, dessen Identifikationscodewort zur Übereinstimmung geführt hat, wird dann in den Systemspeicher SP kopiert. Danach wird in der betreffenden Ländervariantentabelle LV2 das an nächster Stelle vermerkte Identifikationscodewort BP2 gelesen und in den Festwertspeicherbausteinen FW nach diesem Identifikationscodewort gesucht. Auf diese Weise werden nach Vorgabe der Ländervariantentabelle LV2 aus den vorhandenen Festwertspeicherbausteinen FW die zur Bildung der betreffenden Ländervariante erforderlichen Festwertspeicherbausteine FW ausgewählt und deren Programminhalt zur Bildung des betreffenden Ländervariantenprogramms in den Systemspeicher SP übertragen, in dem dann ein vom Mikroprozessor UP abarbeitbares Programm gespeichert ist.

Für den Fall, daß das Selektionsprogramm zu wenigstens einem der in der betreffenden Ländervariantentabelle LV2 vermerkten Identifikationscodeworte keine Übereinstimmung ermitteln konnte, wird auf einem Ausgabegerät (nicht dargestellt) ein Fehlertext angezeigt, der auf das Fehlen der betreffenden Festwertspeicherbausteine FW hinweist.

Bei einer erstmaligen Inbetriebnahme der Kommunikationsanlage empfiehlt es sich, daß das Selektionsprogramm sämtliche mögliche Ländervarianten auf die beschriebene Weise konfiguriert, so daß der Nachweis erbracht werden kann, daß zur Konfigurierung sämtlicher möglicher Ländervarianten die zugehörigen Festwertspeicherbausteine zur Verfügung stehen.

## Patentansprüche

1. Verfahren zur Verifikation einer Konfigurationszugehörigkeit von zur Bildung einer spezifischen Programm- und/oder Datenkonfiguration in einer programmgesteuerten Verarbeitungseinrichtung vorgesehenen und in je einem frei adressierbaren Festwertspeicherbaustein (FW) hinterlegten Programm- und/oder Datenmodulen, bei dem in den Festwertspeicherbausteinen (FW) jeweils an der gleichen Adresse ein dem Programm- und/oder Datenmodul individuell zugeordnetes Identifikationscodewort (BP1,...,BP4) gespeichert ist, das für einen Vergleich mit in einer der spezifischen Programm- und/oder Datenkonfiguration zugeordneten Tabelle (TB) vermerkten Identifikationscodeworten (BP1,...,BP4) aus den Festwertspeicherbausteinen (FW) gelesen wird.

2. Verfahren nach Anspruch 1,
**dadurch gekennzeichnet,**
daß in einer programmgesteuerten Verarbeitungseinrichtung, bei der für die Bildung einer spezifischen Programm- und/oder Datenkonfiguration eine Anordnung der Festwertspeicherbausteine (FW) in einer konfigurationsindividuellen Reihenfolge vorgesehen ist, ein Prüfprogramm aktivierbar ist, von dem die Festwertspeicherbausteine (FW) nacheinander selektiert werden, wobei jeweils das Identifikationscodewort ausgelesen und mit dem in einer, der spezifischen Programm- und/oder Datenkonfiguration zugeordneten Tabelle (TB) an einer der Reihenfolgenposition des selektierten Festwertspeicherbausteins innerhalb der Anordnung entsprechenden Reihenfolgenposition vermerkten Identifikationscodewortes auf Übereinstimmung verglichen wird.

3. Verfahren nach Anspruch 2,
**dadurch gekennzeichnet,**
daß in den Fällen, in denen vom Prüfprogramm beim Vergleich der gelesenen mit den vermerkten Identifikationscodeworten an jeder Reihenfolgenposition Übereinstimmung erkannt wird, eine Initialisierungsmeldung zur Inbetriebnahme der programmgesteuerten Verarbeitungseinrichtung gebildet wird.

4. Verfahren nach einem der Ansprüche 2 oder 3,
**dadurch gekennzeichnet,**
daß in den Fällen, in denen vom Prüfprogramm beim Vergleich der gelesenen mit den vermerkten Identifikationscodeworten wenigstens an einer Reihenfolgenposition keine Übereinstimmung erkannt wird, eine die betreffenden Reihenfolgenpositionen markierende Fehlermeldung erzeugt wird.

5. Verfahren nach Anspruch 4,
**dadurch gekennzeichnet,**
daß aus der Fehlermeldung auf einer Anzeigeeinrichtung der programmgesteuerten Verarbeitungseinrichtung ein Fehlertext gebildet wird, der die markierten Reihenfolgenpositionen optisch anzeigt.

6. Verfahren nach Anspruch 1,
**dadurch gekennzeichnet,**
daß in einer programmgesteuerten Verarbeitungseinrichtung, bei der für die Bildung einer selektierbaren Programm- und/oder Datenkonfiguration ein Kopiervorgang von in Festwertspeicherbausteinen (FW) hinterlegten Programm- und/oder Datenmodulen in einen Systemspeicher (SP) durchgeführt wird,
von einem Selektionsprogramm die in einer der selektierten Programm- und/oder Datenkonfiguration zugeordneten Tabelle (LV2) in einer Abfolge vermerkten Identifikationscodeworte (BP1,...,(BP4) nacheinander jeweils mit den aus den Festwertspeicherbausteinen (FW) ausgelesenen Identifikationscodeworten auf Übereinstimmung verglichen werden und bei Übereinstimmung eines vermerkten mit einem gelesenen Identifikationscodewort jeweils das in dem Festwertspeicherbaustein (FW), in dem das gelesene Identifikationscodewort gespeichert ist, enthaltene Programm- und/oder Datenmodul ausgelesen und in den Systemspeicher (SP) eingeschrieben wird.

7. Verfahren nach Anspruch 6,
**dadurch gekennzeichnet,**
daß in den Fällen, in denen vom Selektionsprogramm zu allen in der zugeordneten Tabelle (LV2) vermerkten Identifikationscodeworten übereinstimmende Identifikationscodeworte gelesen werden, eine Initialisierungsmeldung zur Inbetriebnahme der programmgesteuerten Verarbeitungseinrichtung gebildet wird.

8. Verfahren nach einem der Ansprüche 6 oder 7,
**dadurch gekennzeichnet,**
daß in den Fällen, in denen wenigstens zu einem vermerkten Identifikationscodewort kein übereinstimmendes Identifikationscodewort gelesen wird, eine die betreffenden vermerkten Identifikationscodeworte markierende Fehlermeldung erzeugt wird.

9. Verfahren nach Anspruch 8,
**dadurch gekennzeichnet,**
daß aus der Fehlermeldung auf einer Anzeigeeinrichtung der programmgesteuerten Verarbeitungseinrichtung ein Fehlertext gebildet wird, der ein Fehlen von Festwertspeicherbausteinen anzeigt, in denen die markierten Identifikationscodeworte gespeichert sind.

10. Verfahren nach einem der vorhergehenden Ansprüche,
**gekennzeichnet** durch
eine Verifikation der Zugehörigkeit von zur länderspezifischen Ausgestaltung einer Kommunikationsanlage in Festwertspeicherbausteinen (FW) hinterlegten Programm- und/oder Datenmodulen.
